# EUROPÄISCHE PATENTANMELDUNG

(11) **EP 0 950 456 A1**
(43) Veröffentlichungstag der Anmeldung: **20.10.1999**
(21) Anmeldenummer: 98810325.5
(22) Anmeldetag: 15.04.1998
(51) Int. Cl.: B23C 5/10

(54) **Zweischneidiger Kugelkopffräser**

(71) Anmelder: FRAISA SA, 4512 Bellach (CH)
(72) Erfinder: Lux, Stefan, CH-4500 Solothurn (CH)
(74) Vertreter: Patentanwälte Breiter + Wiedmer AG

(57) **Zusammenfassung**

Bei einem zweischneidigen Kugelkopffräser bildet eine der Hauptschneiden (36) mit einer umlaufenden Kante (52) einer in den Stirnbereich (15) des Schneidteils (14) eingearbeiteten Nut (48) eine auf der Werkzeugachse (x) liegende Schneidenecke (44). Mit dieser Schneidengeometrie ist ein Zerspanen der zu bearbeitenden Werkstücke bis ins Zentrum des Werkzeugs möglich. Dies führt zu einer verbesserten Oberflächenqualität der bearbeiteten Werkstücke und das Verschleissverhalten des Werkzeugs im Zentrumsbereich wird verbessert.

## Beschreibung

Die Erfindung betrifft einen zweischneidigen Kugelkopffräser mit zwei im Stirnbereich des Schneidteils gegen die Werkzeugachse zulaufenden Hauptschneiden.

Bei der herkömmlichen Schneidengeometrie im Stirnbereich zweischneidiger Kugelkopffräser sind die beiden Haupt- oder Stirnschneiden über einen das Zentrum der Stirnfläche des Schneidteils durchlaufenden Steg miteinander verbunden. Dieser Verbindungssteg dient der gegenseitigen Abstützung der beiden Hauptschneiden im Stirnbereich.

Durch den Scharfschliff des Werkzeugs sind die beiden Freiflächen an den Hauptschneiden zueinander gegensinnig verschränkt, so dass im Zentrum des Werkzeugs ein unstetiger Übergang mit zwei exponierten Schneidenecken entsteht. Diese Geometrie im Zentrum des Fräswerkzeugs wirkt sich sowohl im Hinblick auf das Verschleissverhalten als auch hinsichtlich der Oberflächenqualität der bearbeiteten Werkstücke negativ aus:
- Unter der Belastung im Zerspanprozess neigen die Schneidenecken bereits nach kurzer Einsatzdauer zum Ausbrechen und führen aufgrund der gleichfalls an diesen Stellen abgetragenen Hartstoffschicht zu einem erhöhten Verschleissfortschritt.
- Das Werkstückmaterial wird im Zentrumsbereich nicht zerspant, sondern vielmehr elastisch und plastisch verformt. Dadurch ergibt sich eine unbefriedigende Oberflächenqualität der gefrästen Werkstücke.

Durch einen modifizierten Anschliff der Stirnfreifläche kann der Übergang der beiden Freiflächen an den Hauptschneiden stetiger ausgestaltet und damit das Verschleissverhalten des Fräsers in diesem Bereich verbessert werden. Darüber hinaus kann mit dieser Massnahme auch eine gewisse Verbesserung der Oberflächenqualität erzielt werden.

Der vorliegenden Erfindung liegt die Aufgabe zugrunde, einen zweischneidigen Kugelkopffräser der eingangs genannten Art zu schaffen, der die den Fräsern mit herkömmlicher Schneidengeometrie im Stirnbereich anhaftenden Nachteile überwindet und den Forderungen nach bestmöglicher Oberflächenqualität der bearbeiteten Werkstücke Rechnung trägt.

Zur erfindungsgemässen Lösung der Aufgabe führt, dass eine der Hauptschneiden mit einer umlaufenden Kante einer in den Stirnbereich eingearbeiteten Nut eine auf der Werkzeugachse liegende Schneidenecke bildet.

Die erfindungsgemässe Schneidengeometrie im Stirnbereich des Schneidteils ermöglicht ein Zerspanen bis in das Zentrum des Werkzeugs hinein.

Bei einer bevorzugten Ausführungsform des erfindungsgemässen Kugelkopffräsers bildet die zweite Hauptschneide mit der Nutkante eine in Abstand zur ersten Schneidenecke angeordnete zweite Schneidenecke. Bei einer besonders bevorzugten Schneidengeometrie liegen die beiden Schneidenecken in der gleichen Ebene, d.h. die beiden Hauptschneiden fluchten miteinander über die Werkzeugachse.

Bevorzugt weist die Nut eine die im Stirnbereich des Schneidteils durch die Hauptschneide und die Werkzeugachse definierte Ebene schneidende Längsachse auf. Durch die Wahl der Lage der Längsachse der Nut bezüglich der durch die Hauptschneide und die Werkzeugachse definierten Ebene kann das Zerspanverhalten des Fräsers weiter optimiert und beispielsweise den zu bearbeitenden Werkstoffen angepasst werden. Hierbei kann die Längsachse der Nut senkrecht zu der durch die Hauptschneide und die Werkzeugachse definierten Ebene liegen. Im allgemeinen wird jedoch die Nut mit dieser Ebene einen von 90° positiv oder negativ abweichenden Winkel einschliessen.

Trotzdem die Schnittgeschwindigkeit auch beim erfindungsgemässen Fräser bis ins Werkzeugzentrum auf den Wert 0 absinkt, wirkt sich die erfindungsgemässe Schneidengeometrie im Zentrumsbereich im Vergleich zur konventionellen Geometrie ungleich günstiger aus. Die mit dem erfindungsgemässen Fräser erzielte Zerspanung des Werkstoffs im Gegensatz zu einer Verdrängung beim Einsatz von Fräsern nach dem Stand der Technik manifestiert sich insbesondere in einer verbesserten Oberflächenqualität der bearbeiteten Werkstücke.

Weitere Vorteile, Merkmale und Einzelheiten der Erfindung ergeben sich aus der nachfolgenden Beschreibung eines bevorzugten Ausführungsbeispiels im Vergleich zum Stand der Technik sowie anhand der Zeichnung; diese zeigt schematisch in
- Fig. 1: eine Seitenansicht eines zweischneidigen Kugelkopffräsers;
- Fig. 2: die Draufsicht auf den Schneidteil des Fräsers von Fig. 1 mit einer Schneidengeometrie im Stirnbereich nach dem Stand der Technik in Blickrichtung der Werkzeugachse;
- Fig. 3: eine vergrösserte Darstellung des Zentrumsbereichs von Fig. 2;
- Fig. 4: einen vergrösserten Schnitt durch den Schneidteil von Fig. 3 nach deren Linie A-A;
- Fig. 5: die Draufsicht auf den Schneidteil des Fräsers von Fig. 1 mit erfindungsgemässer Schneidengeometrie im Stirnbereich in Blickrichtung der Werkzeugachse;
- Fig. 6: eine vergrösserte Darstellung des Zentrumsbereichs von Fig. 5;
- Fig. 7: einen Schnitt durch die Nut des Schneidteils von Fig. 6 nach deren Linie B-B;
- Fig. 8: eine Seitenansicht der Schnittfläche der Nut mit der Hauptschneide des Schneidteils von Fig. 6 in Blickrichtung y.

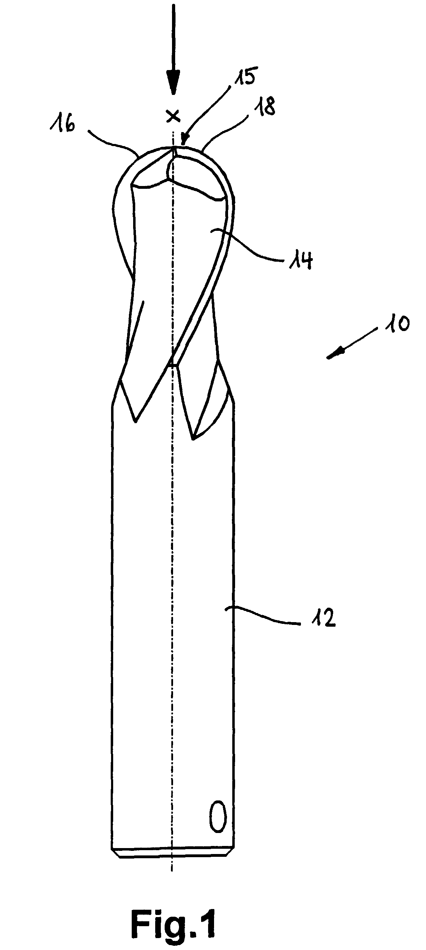

Ein Kugelkopffräser 10 weist gemäss Fig. 1 einen Schaft 12 auf, welchem ein Schneidteil 14 als Bearbeitungswerkzeug in der Werkzeugachse x aufgesetzt ist. Der Schaft 12 des Kugelkopffräsers 10 dient zum Einspannen in eine aus Gründen der besseren Übersicht in der Zeichnung nicht wiedergegebene Spindel einer Fräsmaschine.

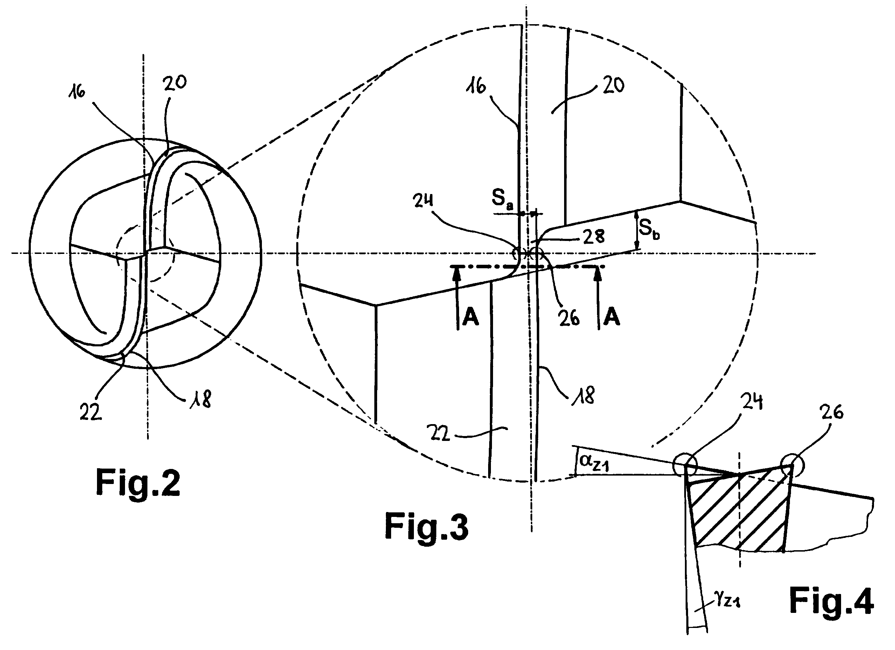

Bei dem in den Fig. 2 bis 4 gezeigten Schneidteil 14 mit einer dem Stand der Technik entsprechenden Schneidengeometrie im Stirnbereich 15 sind die beiden Hauptschneiden in dem durch die Werkzeugachse x definierten Zentrum Z des Stirnbereichs 15 um ein Mass sₐ parallel zueinander versetzt angeordnet. Durch den Scharfschliff des Werkzeugs sind die beiden Freiflächen 20, 22 der Hauptschneiden 16, 18 unter Bildung je eines Freiwinkels α_{Z1} zueinander gegensinnig verschränkt, so dass im Zentrumsbereich des Werkzeugs ein unstetiger Übergang mit zwei exponierten Schneidenecken 24, 26 entsteht. Die beiden Hauptschneiden 16, 18 sind über einen Steg 28 einer Länge s_{b} miteinander verbunden. Die Breite dieses Verbindungssteges 28 entspricht an ihrer schmalsten Stelle dem gegenseitigen parallelen Abstand sₐ der beiden Hauptschneiden 16, 18. Der Spanwinkel im Zentrumsbereich ist mit γ_{Z1} bezeichnet.

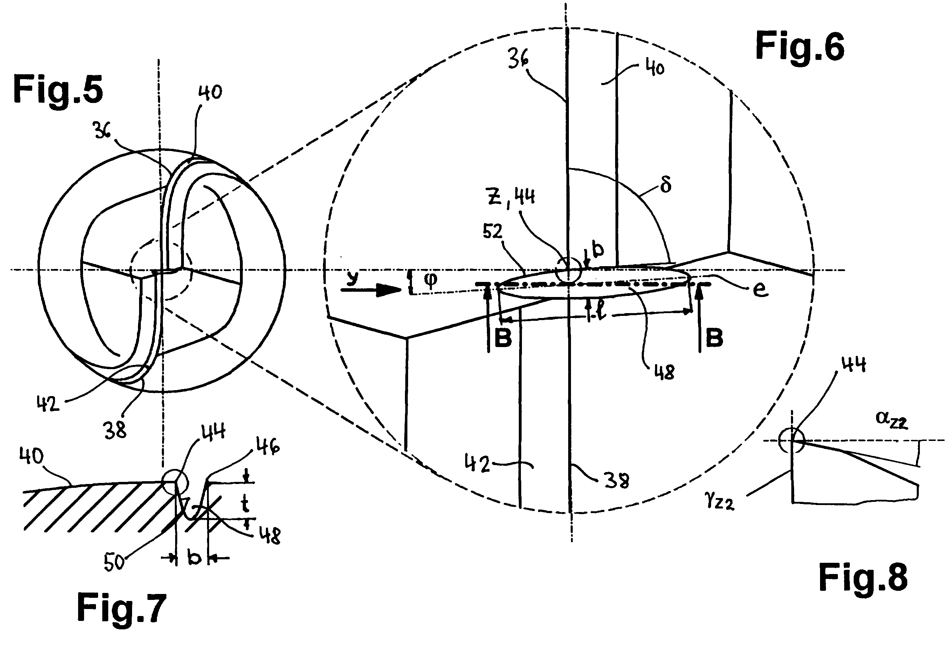

Ein in den Fig. 5 bis 8 gezeigtes Schneidteil 14 mit erfindungsgemässer Schneidengeometrie im Stirnbereich 15 weist über die Werkzeugachse x fluchtende Hauptschneiden 36, 38 mit den Freiflächen 40, 42 auf. Im Zentrumsbereich ist eine querschnittlich im wesentlichen U- bzw. V-förmige Nut 48 eingearbeitet. Die Nut 48 schneidet mit einer Nutwand 50 eine erste Hauptschneide 36 exakt im Zentrum Z, wobei die Nutkante 52 mit der Hauptschneide 36 eine auf der Werkzeugachse x liegende Schneidenecke 44 bildet. Eine zweite Schneidenecke 46 entsteht in einem Abstand zum Zentrum Z durch den Schnitt der Nut 48 mit der zweiten Hauptschneide 38. Der Spanwinkel der Hauptschneide 36 im Zentrum Z ist mit γ_{Z2} und der Freiwinkel mit α_{Z2} bezeichnet.

Die Längsachse e der Nut 48 bildet mit der durch die Hauptschneiden 36, 38 mit der Werkzeugachse x gebildeten Ebene einen von der Senkrechten abweichenden Winkel ϕ, d.h. die Längsache e der Nut 48 ist gegenüber der genannten Ebene um einen Winkel δ = 90° - ϕ geneigt. Die Länge l der Nut 48 ergibt sich aus ihrer Tiefe t, ihre Breite b entspricht im wesentlichen dem gegenseitigen Abstand der beiden Schneidenecken 44, 46.

## Patentansprüche

1. Zweischneidiger Kugelkopffräser mit zwei im Stirnbereich (15) des Schneidteils (14) gegen die Werkzeugachse (x) zulaufenden Hauptschneiden (36,38),
dadurch gekennzeichnet, dass
eine der Hauptschneiden (36) mit einer umlaufenden Kante (52) einer in den Stirnbereich (15) eingearbeiteten Nut (48) eine auf der Werkzeugachse (x) liegende Schneidenecke (44) bildet.

2. Kugelkopffräser nach Anspruch 1, dadurch gekennzeichnet, dass die zweite Hauptschneide (38) mit der Nutkante (52) eine in Abstand zur ersten Schneidenecke (44) angeordnete zweite Schneidenecke (46) bildet.

3. Kugelkopffräser nach Anspruch 2, dadurch gekennzeichnet, dass die beiden Hauptschneiden (36,38) über die Werkzeugachse (x) miteinander fluchten.

4. Kugelkopffräser nach einem der Ansprüche 1 bis 3, dadurch gekennzeichnet, dass die Nut (48) ein die im Stirnbereich (15) des Schneidteils (14) durch die Hauptschneide (36) und die Werkzeugachse (x) definierte Ebene schneidende Längsachse (e) aufweist.

5. Kugelkopffräser nach Anspruch 4, dadurch gekennzeichnet, dass die Längsachse (e) der Nut (48) mit der durch die Hauptschneide (36) und die Werkzeugachse (x) definierten Ebene einen von 90° abweichenden Winkel (δ) einschliesst.
